Europäisches Patentamt

European Patent Office

Office européen des brevets

(11) Veröffentlichungsnummer: **0 375 982**

**A1**

## (12) EUROPÄISCHE PATENTANMELDUNG

(21) Anmeldenummer: **89122096.4**

(22) Anmeldetag: **30.11.89**

(51) Int. Cl.5: **A61C 19/045, A61C 11/00**

(30) Priorität: **24.12.88 DE 3843757**

(43) Veröffentlichungstag der Anmeldung:
**04.07.90 Patentblatt 90/27**

(84) Benannte Vertragsstaaten:
**AT BE CH ES FR GB IT LI NL SE**

(71) Anmelder: **Arbeitsgemeinschaft für wirtschaftsnahe Forschung und Entwicklung AWFE an der Fachhochschule Aalen Beethovenstrasse 1 D-7080 Aalen(DE)**

(72) Erfinder: **Franke, Horst Marderstrasse 20/4 D-7080 Aalen(DE)**
Erfinder: **Schrimpf, Joachim Panoramastrasse 23 D-7070 Schwäbisch Gmünd(DE)**
Erfinder: **Osbar, Bernd Hüttfeldstrasse 38 D-7080 Aalen(DE)**

(74) Vertreter: **Lorenz, Werner, Dipl.-Ing. Fasanenstrasse 7 D-7920 Heidenheim(DE)**

(54) **Verfahren zum Anfertigen einer Zahnprothese.**

(57) Bei einem Verfahren zum Anfertigen einer Zahnprothese mit einem Artikulator, wird die Gelenkbahn des Patienten über in den Mund eingesetzte Bißgabeln (1A,1B) und damit verbundene Übertragungsbögen ermittelt. Danach erfolgt in dem Artikulator die die Relativbewegung zwischen Oberkiefermodell und Unterkiefermodell ermöglichende Einstellung der Laufbahnen. An die an die Zahnreihen des Patienten befestigte Bißgabeln (1A,1B) weden die Übertragungsbögen (6A,6B) über mit den Bißgabeln einstellbar verbundene Aufnahmen angepaßt, lagerichtig eingestellt und durch Blockieren der Einstellbarkeit der Aufnahmen gegenüber den Bißgabeln fixiert. Durch an den freien Enden der Übertragungsbogen (6A,6B) angeordnete Gleitbahnübertragungsteile (7), die mit Abformmassen (8) versehen sind, und an den Bogenenden der anderen Übertragungsbogen (6A,6B) angeordnete Abformstifte (9) durch die Abformstifte die patientenspezifischen den natürlichen Gelenkbahnen synchronen Gelenkbahnen in die Abformmasse eingebracht wird, werden nach Aushärten der Formmasse vom Gebiß des Patienten angefertigte Gipsmodelle mit den Bißgabeln (1A,1B), an denen noch die positionierten und fixierten Aufnahmen lagerichtig befestigt sind, zusammen mit den Gleitbahnübertragungsteilen (7) in den Artikulator eingesetzt und positioniert.

Fig 1

## Verfahren zum Anfertigen einer Zahnprothese

Die Erfindung betrifft ein Verfahren zum Anfertigen einer Zahnprothese mit einem Artikulator, wobei die Gelenkbahnen des Patienten über in den Mund eingesetzte Bißgabeln und damit verbundene Übertragungsbögen ermittelt werden und danach in dem Artikulator die die Relativbewegung zwischen Oberkiefermodell und Unterkiefermodell ermöglichende Einstellung der Laufbahnen erfolgt und Vorrichtungen zur Durchführung des Verfahrens.

Zum Anfertigen einer Zahnprothese wird im allgemeinen zuerst von den Zahnreihen ein Modell aus Gips, Epoxyharz, oder dgl. hergestellt. Zur Herstellung der Zahnprothese und zur Simulation der Kieferbewegungen dient ein Artikulator, den der Zahntechniker verwendet. Hierzu besitzt der Artikulator ein Oberteil und ein Unterteil, wobei jeweils an einer Tragplatte bzw. Aufnahme das Oberkiefer- und das Unterkiefermodell befestigt sind. Die beiden Artikulatorenteile sind dabei gelenkig miteinander verbunden, wobei über eine Gelenkbahn, auf der ein Gelenkstift oder ein Gelenkkopf abläuft, die Kieferbewegung zwischen den beiden Artikulatorteilen simuliert wird.

Im allgemeinen ist dabei das Oberteil des Artikulators mit dem Oberkiefer relativ zu dem Unterkiefer bewegbar oder wie es in der DE-OS 34 38 182 beschrieben ist, in anatomischer richtiger Weise das Unterteil mit dem Unterkiefermodell gegenüber dem Oberteil bewegbar.

Schwierigkeiten bei dem bekannten Verfahren bereiten jedoch die Gelenkbahnen zur Simulation der Kieferbewegung, die patientenspezifisch ist.

Bei einfacheren Artikulatoren sind die Gelenkbahnneigungen auf Mittelwerte eingestellt. Dadurch können nur Bewegungen durchgeführt werden, die durch die unveränderlichen Gelenkbahnen vorgegeben sind. Da jedoch die Gelenkbahnneigungen -wie erwähnt - individuell verschieden sind, kann damit keine patientenspezifische Simulation über einen Artikulator erfolgen.

Es sind zwar auch bereits Artikulatoren mit einstellbaren Glenkbahnen bekannt, wobei der Neigungs- und Benettwinkel (für Seiten- und Vorwärtsbewegung des Kiefergelenkes) durch Funtionswachsbisse für jeden Patienten individuell eingestellt werden, nachteilig dabei ist jedoch, daß hier jeweils nur der Anfangspunkt (Okklusion) und Endpunkt (durch Bißregistrate gegeben) bekannt und die Gelenkbahn den beiden Punkten unbekannt ist und in der Regel als linear angenommen wird. Tatsächlich ist jedoch in der Natur die Gelenkbahn nicht linear, sondern besitzt eine mehr oder weniger stark ausgeprägte S-Form. Unabhängig von dem Aufwand, der durch die Abnahme der Bißregistrate zur Einstellung der Gelenkbahnwinkel erforderlich ist, ist auch dieses Verfahren relativ ungenau. Darüberhinaus besitzt ein Artikulator mit einer derartigen Gelenkbahn zu viele Freiheitsgrade. Beim Verschieben des Unterkiefers entfällt nämlich die Seitenführung, so daß sich ein ungenaues Spiel ergibt. Darüberhinaus ist ein derartiger Artikulator relativ teuer.

Der vorliegenden Erfindung liegt daher die Aufgabe zugrunde ein Verfahren zum Anfertigen einer Zahnprothese und Teile hierfür zu schaffen, mit denen auf einfache Weise und sehr genau in bzw. mit dem Artikulator die Kiefergelenkbewegungen patientenspezifisch simuliert werden können.

Erfindungsgemäß wird diese Aufgabe dadurch gelöst, daß an die an die Zahnreihen des Patienten befestigte Bißgabeln die Übertragungsbögen über mit den Bißgabeln einstellbar verbundene Aufnahmen angepaßt, lagerichtig eingestellt und durch Blockieren der Einstellbarkeit der Aufnahmen gegenüber den Bißgabeln fixiert werden, wonach durch an den freien Enden der Übertragungsbogen angeordnete Gleitbahnübertragungsteile, die mit plastischen, aushärtbaren Abformmassen versehen sind, und an den Bogenenden der anderen Übertragungsbogen angeordnete Abformstifte durch die Abformstifte die patientenspezifischen zu den natürlichen Gelenkbahnen synchronen Gelenkbahnen in die Abformmasse eingebracht wird, wonach nach Aushärten der Formmasse vom Gebiß des Patienten angefertigte Gipsmodelle mit den Bißgabeln, an denen noch die positionierten und fixierten Aufnahmen lagerichtig befestigt sind, zusammen mit den Gleitbahnübertragungsteilen in den Artikulator eingesetzt und positioniert werden.

Durch das erfindungsgemäße Verfahren ist in dem Artikulator eine Kieferbewegung simulierbar, die weitgehend die natürliche Bewegung des Patienten wiedergibt. Dies wird im wesent lichen dadurch möglich, daß die Bahn räumlich und kontinuierlich aufgezeichnet, d.h. in die Abformmasse eingebracht wird. Ohne Umwege über Einstellmechanismen und/oder elektronische Daten werden anschließend nach Aushärten der Abformmasse der Gleitbahnübertragungsteile, an welchen sich die Abformmassen befinden, direkt im Artikulator verwendet. Damit haben Aufzeichnungspunkt und Gebiß des Patienten den gleichen geometrischen Abstand wie der Gelenkpunkt und das Gipsmodell im Artikulator, da auch in dem Artikulator Übertragungsbogen mit der gleichen Geometrie vorhanden sind und die fixierten Aufnahmen an den Bißgabeln damit verbunden werden. Zwar liegt dabei der Aufzeichnungspunkt nicht im Kondylenzentrum, aber er führt durch die Fixierung am Unterkiefer eine Synchronbewegung zum Kondylus aus. Im Artikulator führt dann das Ersatzgelenk eine Gleitbewegung aus, welche die Bewegung des Kondylus beim Patienten richtig wiedergibt. Dies ist insbesondere dann der Fall, wenn ein Artikulator verwendet wird, bei dem das Unterteil mit dem Unterkiefermodell gegenüber dem Oberteil beweglich ist.

Eine vorteilhafte Weiterbildung des erfindungsgemäßen Verfahrens kann darin bestehen, daß zur lagerichtigen Positionierung der Bißgabeln und der Übertragungsbögen Ausrichtblöcke, in denen die inneren Bügelenden befestigt sind, zueinander zentriert werden.

Durch die Ausrichtblöcke werden die Bißgabeln über die damit verbundene Aufnahmen und die Übertragungsbogen zueinander lagerichtig eingestellt und dann fixiert.

In Weiterbildung der Erfindung kann vorgesehen sein, daß die Gleitbahnübertragungsteile mit den Abformmassen in eines der beiden beweglich zueinander liegenden Teile des Artikulators eingesetzt werden, und daß in die Abformmassen bzw. die abgeformte Gelenkbahnen jeweils ein in dem anderen Teil des Artikulators axial verschiebbarer Gelenkstift in die ausgeformte Führungsbahnen eingeschoben wird.

Zur Durchführung des Verfahrens wird man an den beiden Enden eines Übertragungsbogens, z.B. für den Oberkiefer, Gleitbahnübertragungsteile mit den Abformmassen anbringen und an den anderen Übertragungsbogen für den Unterkiefer je einen Abformstift, der dann die Kieferbewegung des Patienten in die Abformmasse dreidimensional einzeichnet.

Nachfolgend sind anhand der Zeichnung Ausführungsbeispiele der Erfindung, aus denen weitere erfindungsgemäße Mermale hervorgehen, prinzipmäßig näher beschrieben.

Es zeigt:

Fig. 1: Vermessung und Einbringen der Gelenkbahn in eine Abformmasse mit den Vorrichtungsteilen hierfür;

Fig. 2: Einsetzten der Modelle in einen Artikulator;

Fig. 3: Befestigen der Modelle in dem Artikulator;

Fig. 4: Einsetzten der Modelle in einen Artikulator anderer Bauart mit beweglichem Unterteil;

Fig. 5: Artikulator nach Fig. 4 mit seinem konstruktiven näher beschriebenen Aufbau;

Fig. 6: ausschnittsweise Darstellung eines Gleitbahnübertragungsteiles mit Gelenkstift in einem Artikulator;

Fig. 7: Ansicht nach der Linie VII - VII nach der Fig. 6.

Zur Durchführung des erfindungsgemäßen Verfahrens ist in einem ersten Schritt z.B. eine mundgeschlossene Abformung erforderlich. Anschließend wird ein Modell, z.B. aus Gips, Epoxyharz- o.

dgl. hergestellt. An dem Modell wird dann eine Oberkiefer- und eine Unterkieferbißgabel abgeformt. Ggf. folgt noch eine Feinabformung am Gebiß des Patienten. Weiter können die Bißgabeln mit entsprechend aushärtenden Kunststoffen direkt am Patienten angepaßt werden.

Nach diesen Vorarbeiten beginnt die Abformung der synchronen Gelenkbahn. In den Mund des Patienten wird die vorher abgeformte Bißgabeln 1a und 1B für den Oberkiefer und den Unterkiefer auf das vorhandene Gebiß des Patienten exakt außenseitig aufgesetzt. Die beiden Bißgabeln sind auf der aus dem Mund ragenden Seite des Patienten mit einstellbaren Aufnahmen 2A und 2B versehen, die verschieblich und schwenkbar an Aufnahmenplatten 3A und 3B angeordnet sind, welche wiederum mit den Bißgabeln 1A und 1B fest verbunden sind.

Wie ersichtlich, besitzen die Aufnahmen Verschiebemöglichkeiten in Y- und Z-Richtung und Schwenkmöglichkeiten um die Y- und Z-Achse. Die Aufnahmen weisen eine Hülsen- oder Dornform auf, und werden in Bohrungen 4A und 4B von zwei übereinander liegenden Ausrichtblöcken 5A und 5B eingeschoben. Seitlich münden jeweils in die Ausrichtblöcke innere Enden von Übertragungsbögen 6A und 6B. An den freien Enden des Übertragungsbogens 6A und 6B für den Oberkiefer befindet sich jeweils ein Gleitbahnübertragungsteil 7, das auf der Außenseite mit einer Abformmasse 8 versehen ist.

An dem darunter liegenden Übertragungsbogen 6B befindet sich an dessen beiden äußeren Enden eine Platte 9 mit einem in axialer Richtung verschiebbaren und einstellbaren Abform stift 10.

Das Abformen der Gelenkbahnen erfolgt nun auf folgende Weise:

Nach dem Festklemmen der beiden Bißgabeln 1A und 1B an den Zahnreihen des Patienten erfolgt die Justierung der Aufnahmen 2A und 2B mit Hilfe der Übertragungsbögen 6A und 6B. Als erstes erfolt eine Ausrichtung des Übertragungsbogens 6A für den Oberkiefer. Anschließend erfolgt die Fixierung der Aufnahme 2A an der Bißgabel 1A und gleichzeitig auch des Übertragungsbogens 6A gegenüber an der Aufnahme. Hierzu ist es lediglich erforderlich, die vorher freie Verschiebbarkeit und Schwenkbarkeit der Aufnahme 2A gegenüber der Bißgabel 1A in der gewünschten Position zu blokkieren.

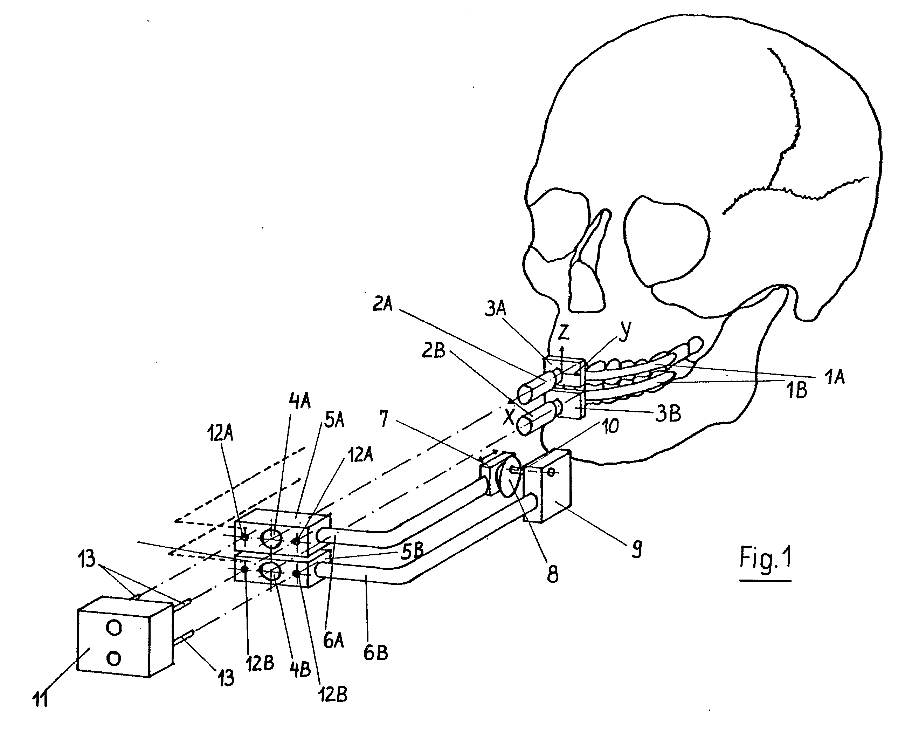

Anschließend erfolgt das Ausrichten des Übertragungsbogens 6B für den Unterkiefer und zwar mit Hilfe eines Justierblockes 11. Hierzu wird der Justierblock 11 jeweils in zwei Bohrungen 12A in dem Ausrichtblock 5A und zwei Bohrungen 12B in dem unteren Ausrichtblock 5B. Hierzu werden vier in einem vorgewählten Abstand an dem Justierblock 11 vorragende Stifte 13 in die Bohrungen 12A und 12B eingeführt, wozu die Ausrichtblöcke 5A und 5B entsprechend auszurichten sind. Damit ist eine lagerichtige Positionierung aller Teile erfolgt. Nach Fixierung auch der Aufnahme 2B gegenüber der Bißgabel 1B können nach Entfernen des Justierblockes 11 bei einer Kaubewegung des Patienten durch die beiden Abformstifte 10 exakt die synchronen Gelenkbahnen in die plastische Abformmasse 8 eingedrückt werden, wozu sich entsprechend dem Zustand die Gleitbahnübertragungsringe 7 und die Abformstifte 9 ungefähr in Höhe des Kiefergelenkes des Patienten seitlich am Kopf befinden (in der Fig. 1 sind die Teile im auseinander gezogenen Zustand dargestellt).

Nach Aushärten der Abformmasse können die Bißgabeln 1A und 1B aus dem Mund des Patienten und die Übertragungsbögen 6A und 6B mit den Ausrichtblöcken 5A und 5B entfernt werden. Die vom dem Gebiß des Patienten abgenommen Bißgabeln 1A und 1B werden auf die nach dem Gebiß des Patienten hergestellten Gipsmodelle, nämlich einem Oberkiefermodell 18A und einem Unterkiefermodell 18B außenseitig wieder aufgeklemmt. Dabei bleiben die vorher eingestellten und fixierten Aufnahmen 2A und 2B unverändert.

Mit Hilfe der Bißgabeln 1A und 1B werden dann die Gipsmodelle 18A und 18B in den Artikulator 14 positioniert. Dabei wird das Oberkiefermodell 18A lagerichtig am Oberteil des Artikulators fixiert, während das Unterkiefermodell 18B am Unterteil 15 fixiert wird. Die genaue Fixierung erfolgt dabei durch die an dem Oberteil angeordnete Übertragungsbogen 26A bzw. mit dem Unterteil verbundenen Übertragungsbogen 26B mit ihren Ausrichtblöcken 25A und 25B die bezüglich ihrer Geometrie und Bohrungen 24A und 24B den Übertragungsbogen 6A und 6B mit den Ausichtblöcken 5A und 5B entsprechen.

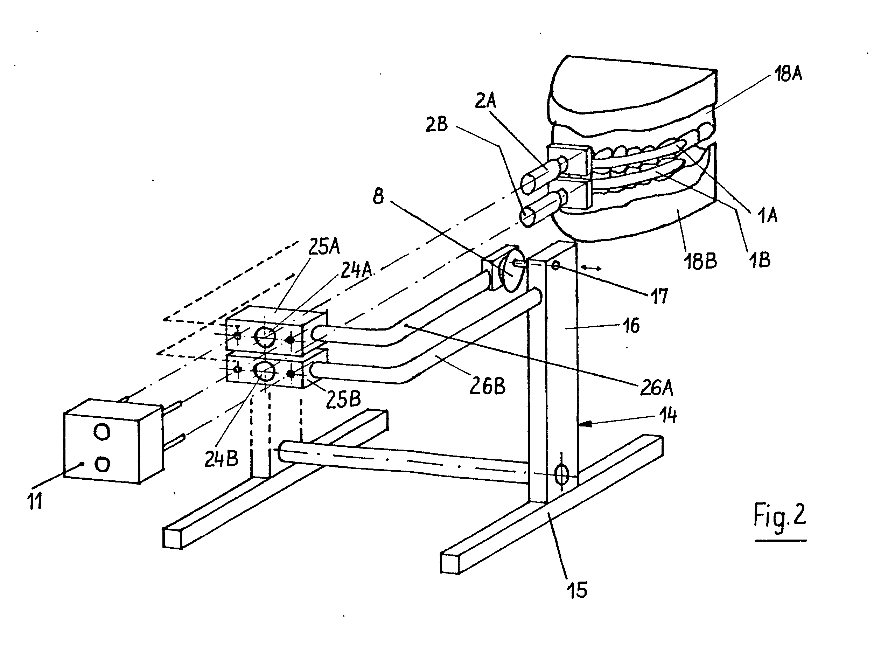

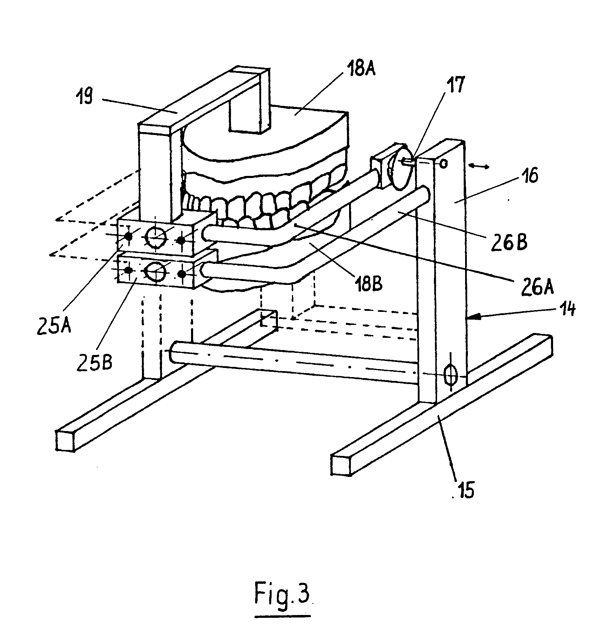

Anschließend können der Justierblock 11, der zur Ausrichtung in der o.a. Art über Bohrungen 42A und 42B mit den Ausrichtblöcken 25A und 25B vorher verbunden worden war, die Bißgabeln 1A und 1B entfernt werden. In den Fig. 2 und 3 sind diese Verfahrensschritte dargestellt, wobei gleichzeitig auch eine Halterung 19 für das Oberkiefermodell 18A ersichtlich ist.

Der Artikulator 14 selbst ist von herkömmlicher Bauart, weshalb nachfolgend nur die für die Erfindung wesentlichen Teile beschrieben snd. Es handelt sich dabei um das Unterteil 15 mit seitlichen Stützen 16, an denen links und rechts in axialer Richtung verschiebbare Gelenkstifte 17 angeordnet sind.

Bei dem in der Fig. 3 dargestellten Artikulator befindet sich die Abformmasse 8 in dem Gleitbahnübertragungsteil 7 jeweils am Ende des Übertragungsbogens 26A, der am Oberteil des Artikulators befestigt ist. Auf diese Weise ist das Oberteil des Artikulators gegenüber dem Unterteil mit dem Unterkiefermodell 18B beweglich, wobei die Bewegungsbahn durch den Gelenkstift 17 festgelegt wird, der in der exakt der Kie fergelenkbewegung nachgebildeten Führungsbahn in der Abdruckmasse läuft. Dabei kann nicht nur die genaue Kurvenbahn simuliert werden, sondern darüberhinaus auch eine exakte Seitenführung, denn die Bahn ist über den Abformstift 10 ja räumlich d.h. dreidimensional in die Abformmasse 8 eingeformt worden.

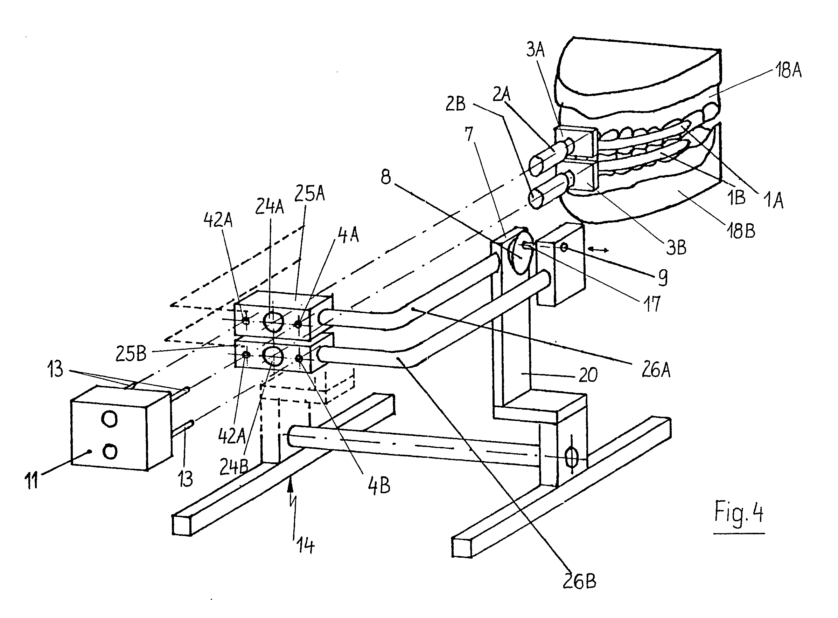

Verwendet man einen Artikulator, bei dem das Unterteil 15 mit dem Unterkiefermodell 18B gegenüber dem starren Oberteil mit dem Oberkiefermodell 18A beweglich ist, läßt sich das erfindungsgemäß Verfahren und die Teile hierfür in gleicher Weise einsetzen. Dies ist aus der Fig. 4 ersichtlich. In diesem Falle befinden sich die beiden seitlichen Gleitbahnübertragungsteile 7 mit den Abformmassen 8 jeweils an einem feststehenden Träger 20, wobei der obere Übertragungsbogen 26A ebenfalls mit dem Träger 20 fest verbunden ist. An den Enden des Übertragungsbogens 26B für das Unterkiefermodell 18B befinden sich jeweils an einer Platte 9 der Gelenkstift 17. Wie ersichtlich, ist in diesem Falle das Oberteil des Artikulators 14 über die Träger 20 auf dem Boden abgestützt, während das Unterteil mit den Übertragungsbögen 6B und den Gelenkstiften 17 frei darunterhängt. Auf diese Weise läßt sich das Unterteil des Artikulators mit dem Unterkiefermodell 18B gegenüber dem feststehenden Oberkiefermodell bewegen.

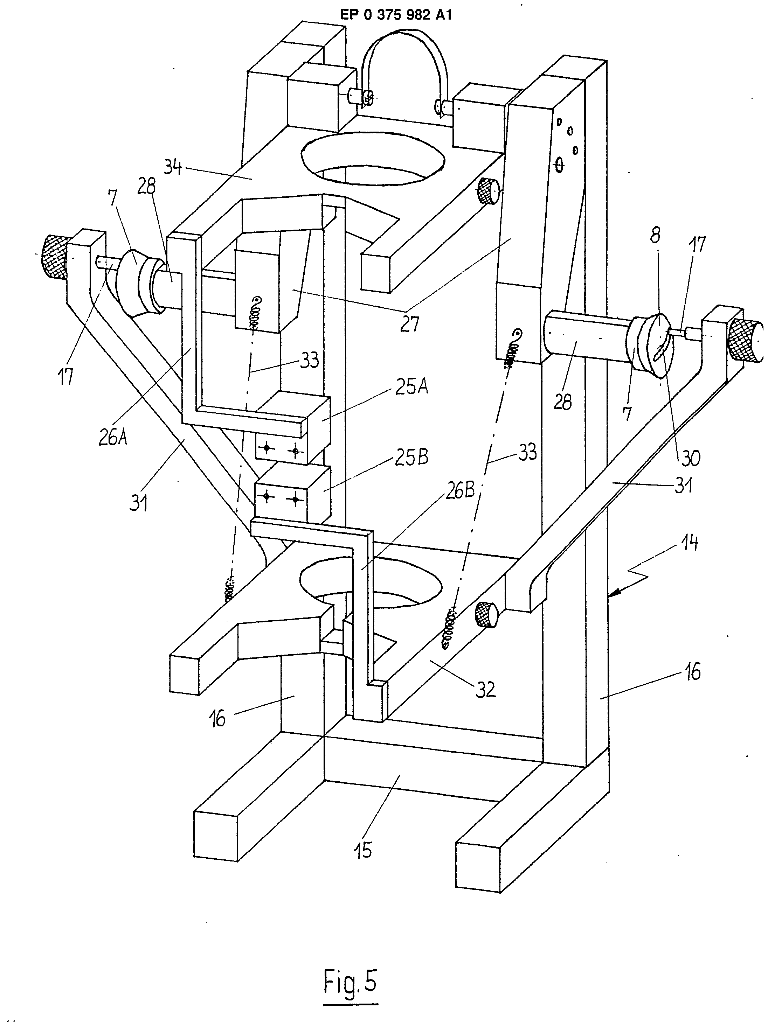

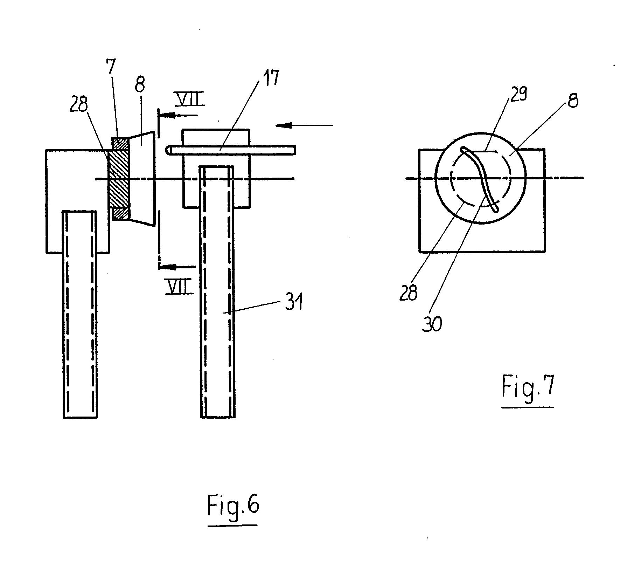

In der Fig. 5 ist der in den Fig. 2 bis 4 nur teilweise und nur prinzipmäßig dargestellte Artikulator deutlicher ersichtlich. An den beiden seitlichen Stützen 16 des Unterteiles 15 sind Verlängerungsarme 27 angeordnet, die horizontal nach außen ragende Aufnahmestifte 28 besitzen, auf die die beiden Gleitbahnübertragungsteile 7 aufgeschoben werden. Hierzu sind die Gleitbahnübertragungsteile 7 auf der Rückseite ringförmig ausgebildet, wobei an einer Stelle (in der Fig. 7 auf der Oberseite) eine von der Kreisform abweichender Innenwandbereich vorhanden ist. In gleicher Weise besitzen die beiden Aufnahmestifte 28 im oberen Bereich eine Abflachung 29 (siehe Fig. 7). Dies bedeutet, daß auf diese Weise die Gleitbahnübertragungsteile 7 stets lagerichtig auf die Aufnahmestifte 28 aufgeschoben werden.

Aus den Fig. 5 und 7 ist die in die Abdruckmasse 8 eingeformte Gleitbahn 30 ersichtlich, in der der Stift 17 geführt wird. Der Stift 17 ist einstellbar mit einem Tragarm 31 verbunden, an dessen unteren Ende eine Plattform 32 angeordnet ist, auf der das Unterkiefermodell 18B lagerichtig positioniert ist. Über Federn 33 ist die Plattform 32 mit dem Unterkiefermodell 18B beweglich mit den Verlängerungsarmen 27 verbunden, wobei jedoch die Art und die Größe der Bewegungsmöglichkeit durch die Gleitbahn 30 und den Führungsstiften 17 festgelegt ist.

An den beiden oberen Enden der Stützen 16 ist eine Plattform 34 befestigt, an deren Unterseite das Oberkiefermodell 18A positioniert wird.

Der konstruktive Aufbau und die Anordnung der Übertragungsbogen 26A und 26B mit ihren Ausrichtblöcken 25A und 25B ist ebenfalls aus der Fig. 5 ersichtlich.

**Ansprüche**

1) Verfahren zum Anfertigen einer Zahnprothese mit einem Artikulator, wobei die Gelenkbahnen des Patienten über in den Mund eingesetzte Bißgabeln und damit verbundene Übertragungsbögen ermittelt werden und danach in dem Artikulator die die Relativbewegung zwischen Oberkiefermodell und Unterkiefermodell ermöglichende Einstellung der Laufbahnen er folgt,
**dadurch gekennzeichnet, daß** an die an die Zahnreihen des Patienten befestigte Bißgabeln (1A,1B) due Übertragungsbögen (6A,6B) über mit den Bißgabeln einstellbar verbundene Aufnahmen angepaßt, lagerichtig eingestellt und durch Blockieren der Einstellbarkeit der Aufnahmen gegenüber den Bißgabeln fixiert werden, wonach durch an den freien Enden der Übertragungsbogen (6A,6B) angeordnete Gleitbahnübertragungsteile (7), die mit Abformmassen versehen sind, und an den Bogenenden der anderen Übertragungsbogen (6A,6B) angeordnete Abformstifte (9) durch die Abformstifte die patientenspezifischen den natürlichen Gelenkbahnen sychronen Gelenkbahnen in die Abformasse eingebracht wird, wonach nach Aushärten der Formmasse vom Gebiß des Patienten angefertigte Gipsmodelle mit den Bißgabeln (1A,1B), an denen noch die positionierten und fixierten Aufnahmen lagerichtig befestigt sind, zusammen mit den Gleitbahnübertragungsteilen (7) in den Artikulator eingesetzt und positioniert werden.

2) Verfahren nach Anspruch 1,
**dadurch gekennzeichnet, daß** zur lagerichtigen Positionierung der Bißgabeln (1A,1B) und der Übertragungsbögen (6A,6B) Ausrichtblöcke (5A,5B), in denen die inneren Enden der Übertragungsbogen (6A,6B) befestigt sind, zueinander zentriert werden.

3) Verfahren nach Anspruch 1 oder 2,
**dadurch gekennzeichnet, daß** die Gleitbahnübertragungsteile (7) mit der Abformmasse (8) in eines der beiden beweglich zueinander liegenden Teile des Artikulators (14) eingesetzt werden, und daß in die Abformmasse bzw. die abgeformte Gelenkbahn ein in dem anderen Teil des Artikulators ein axial verschiebbarer Gelenkstift (17) in die ausgeformte Führungsbahn (30) eingeschoben wird.

4) Vorrichtung zur Durchführung des Verfahrens nach einem der Ansprüche 1 bis 3,
**dadurch gekennzeichnet, daß** an den freien Enden eines Übertragungsbogens (6A,6B) jeweils ein Gleitbahnübertragungsteil (7) mit Abformmasse (8) angeordnet ist, und daß an den freien Enden des anderen Übertragungsbogens (6B) Abformstifte (9) angeordnet sind.

5) Vorrichtung zur Durchführung des Verfahrens nach einem der Ansprüche 1 bis 3,
**dadurch gekennzeichnet, daß** jeweils in der Mitte der inneren Enden eines Übertragungsbogens (6A,6B) jeweils ein Ausrichtblock (5A,5B) angeordnet ist, wobei die beiden Ausrichtblöcke mit Zentriermitteln (11,12A,12B,13) zur gegenseitigen Lagezuordnung versehen sind.

6) Vorrichtung nach Anspruch 5,
**dadurch gekennzeichnet, daß** in den Ausrichtblöcken (5A,5B) Bohrungen (12A,12B) angeordnet sind, in die Stifte eines Justierblockes (11) einführbar sind.

7) Vorrichtung nach Anspruch 6,
**dadurch gekennzeichnet, daß** in jedem Ausrichtblock (5A,5B) zwei auf Astand voneinander angeordnete Bohrungen (12A,12B) vorgesehen sind.

8) Artikulator zur Durchführung des Verfahrens nach einem der Ansprüche 1 bis 3,
**dadurch gekennzeichnet, daß** er mit Einrichtungen (28) versehen ist, mit den die Gleitbahnübertragungsteile (7) mit ihren Abformmassen (8) verbindbar sind.

9) Artikulator nach Anspruch 8,
**dadurch gekennzeichnet, daß** die Einrichtungen Aufnahmestifte (28) aufweisen, auf die die Gleitbahnübertragungsteile (7) mit ihrer ringartigen Rückseite aufschiebbar sind.

10) Artikulator nach Anspruch 9,
**dadurch gekennzeichnet, daß** die Innenwände der ringförmigen Rückwände der Gleitbahnübertragungsteile (7) in einem Bereich eine von der Kreisform abweichende Gestalt aufweisen, und daß die Aufnahmestifte (28) mit Abflachungen (29) versehen sind.

11) Artikulator nach einem der Ansprüche 8 - 10,
**dadurch gekennzeichnet, daß** dessen Unterteil und Oberteil jeweils mit Übertragungsbogen (26A,26B) mit Ausrichtblöcken (25A,25B) versehen sind, die bezüglich ihrer geometrischen Ausgestaltung den Übertragungsbogen (6A,6B) und Ausrichtblöcken (5A,5B) entsprechen.

12) Artikulator nach Anspruch 11,
**dadurch gekennzeichnet, daß** die Ausrichtblöcke (25A,25B) mit Zentriermitteln (11,13,42A,42B) zur gegenseitigen Lagezuordnung versehen sind.

13) Artikulator nach Anspruch 12,
**dadurch gekennzeichnet, daß** die Ausrichtblöcke (25A,25B) mit Bohrungen (24A,24B) zur Aufnahme der Aufnahmen (2A,2B) versehen sind.

14) Artikulator nach Anspruch 12 oder 13, **dadurch gekennzeichnet,** daß die beiden Ausrichtblöcke (25A,25B) mit Bohrungen (42A,42B) versehen sind, in die Stifte (13) des Justierblockes (11) einführbar sind.

Fig.1

Fig.2

AW 2024 EU

EP 0 375 982 A1

Fig.3

AW 2024 EU

AW 2024EU

EP 0 375 982 A1

3A

18A

2B

2A

7

1B 1A

3B

18B

8

25A

24A

42A

4A

9

17

25B

13

42A

24B

4B

11

13

14

26A

20

26B

Fig.4

Fig.5

AW 2024 EU

AW 2024 EU

EP 0 375 982 A1

Fig.6

Fig.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 368 041 (W.G. ROUP) <br> * Ansprüche 1,16; Figuren 7,8 * <br> --- | 1-4,8 | A 61 C 19/045 <br> A 61 C 11/00 |
| X <br><br> A | DE-A-3 432 415 (GIRRBACH DENTAL GMBH) <br> * Ansprüche 1,2 9; Figuren 1-8 * <br><br> --- | 1 <br><br> 2-5 | |
| X <br><br> A | US-A-4 537 574 (A.D. CLARK) <br> * Figuren 1,2; Ansprüche 1-3,7 * <br><br> --- | 1 <br><br> 2-5,8 | |
| X <br><br> A | US-A-4 681 539 (F.J. KNAP) <br> * Ansprüche 1,5,6; Figuren 3,7 * <br><br> --- | 1 <br><br> 2-5,8 | |
| X <br><br> A | DE-A-3 618 042 (E. LANGER) <br> * Ansprüche 1-3; Figuren 1-4 * <br><br> --- | 1 <br><br> 4,8 | |
| A | CH-A- 424 082 (K.H. SWANSON) <br> * Seite 6, Zeilen 18-41 * <br> ----- | 1,4,8 | |

RECHERCHIERTE SACHGEBIETE (Int. Cl.5)

A 61 C

Der vorliegende Recherchenbericht wurde für alle Patentansprüche erstellt

| Recherchenort | Abschlußdatum der Recherche | Prüfer |
|---|---|---|
| BERLIN | 27-02-1990 | KANAL P K |

EPO FORM 1503 03.82 (P0403)